# EUROPÄISCHE PATENTSCHRIFT

(11) **EP 3 377 949 B1**
(45) Veröffentlichungstag und Bekanntmachung des Hinweises auf die Patenterteilung: **01.04.2020**
(21) Anmeldenummer: 16758102.4
(22) Anmeldetag: 11.08.2016
(51) Int. Cl.: G05B 19/042, G06F 9/445

(54) **VERFAHREN ZUM BETREIBEN EINES STEUERGERÄTS SOWIE ZUM EXTERNEN BYPASSING EINGERICHTETES STEUERGERÄT**
METHOD FOR OPERATING A CONTROL DEVICE AND CONTROL DEVICE FOR EXTERNAL BYPASSING
PROCÉDÉ DE FONCTIONNEMENT D'UN APPAREIL DE COMMANDE ET APPAREIL DE COMMANDE CONFIGURÉ POUR UNE DÉRIVATION EXTERNE

(30) Priorität: 19.11.2015 DE 102015120054
(43) Veröffentlichungstag der Anmeldung: 26.09.2018
(73) Patentinhaber: dSPACE digital signal processing and control engineering GmbH, 33102 Paderborn (DE)
(72) Erfinder: HUFNAGEL, Thorsten, 33154 Salzkotten (DE)
(86) Internationale Anmeldenummer: PCT/EP2016/069161
(87) Internationale Veröffentlichungsnummer: WO 2017/084779

(56) Entgegenhaltungen:
- EP-A1- 1 876 525
- WO-A1-2005/091089
- DE-A1- 10 228 610
- DE-A1- 10 235 610
- US-B1- 6 260 157

## Beschreibung

Die Erfindung betrifft ein Verfahren zum Betreiben eines Steuergeräts, wobei auf dem Steuergerät Programmcode mit internen Steuergerätefunktionen hinterlegt ist, wobei der Programmcode mit wenigstens einer Service-Funktion instrumentiert ist. Ferner betrifft die Erfindung auch ein zum externen Bypassing eingerichtetes Steuergerät.

Das vorgenannte Verfahren betrifft insgesamt die Handhabung und Beeinflussung von Steuergeräten in der Steuergeräteentwicklung, nämlich die Steuergeräteentwicklung im Rahmen des sogenannten Rapid-Control-Prototyping (RCP), bei dem (Serien-) Steuergeräte zur Anwendung kommen, die fest implementierte interne Steuergerätefunktionen aufweisen. Die internen Steuergerätefunktionen sind Bestandteil des auf dem Steuergerät abgespeicherten Programmcodes, bei dem es sich im Regelfall um ein ausführbares kompiliertes Programm handelt. Zwar ist es auch denkbar, dass der Programmcode in hochsprachlicher Form vorliegt und interpretiert wird, dies steht jedoch den im Regelfall existierenden Geschwindigkeitsanforderungen aufgrund des Echtzeitbetriebes eines Steuergeräts entgegen.

Im Rahmen der hier betrachteten Steuergeräteentwicklung werden eine oder mehrere dieser internen Steuergerätefunktionen vollständig umgangen, erweitert oder ganz allgemein in bestimmter Weise manipuliert, es handelt sich also methodisch um das sogenannten "Bypassing". Diese Methode der Steuergeräteentwicklung im Rahmen des Rapid-Control-Prototyping unterscheidet sich von der Methode des "Fullpass", bei der ein Steuergerät vollständig durch eine leistungsstarke Entwicklungs-Hardware mit I/O-Schnittstellen ersetzt wird. Diese Entwicklungs-Hardware wird später im Zusammenhang mit dem zu beeinflussenden technischen Prozess nicht eingesetzt, sondern sie wird nach Abschluss der Entwicklungsarbeit durch ein genau zugeschnittenes - und im Regelfall deutlich preiswerteres - Steuergerät ersetzt.

Der hier betrachtete Anwendungsfall besteht darin, dass das Steuergerät über eine I/O-Schnittstelle mit einem technischen Prozess verbunden ist, wobei bei Ausführung des auf dem Steuergerät hinterlegten - also gespeicherten - Programmcodes das Steuergerät über die I/O-Schnittstelle Steuersignale an den technischen Prozess ausgibt und über die I/O-Schnittstelle Zustandsgrößen des technischen Prozesses als Signale empfängt. Beim Rapid-Control-Prototyping durch Bypassing bleibt das Steuergerät in dem zu beeinflussenden und zu beobachtenden technischen Prozess eingesetzt und wird durch das Bypassing funktional beeinflusst. Typischerweise ist das Steuergerät dazu über eine weitere Schnittstelle mit einem Beeinflussungsgerät verbunden. Diese weitere Schnittstelle unterscheidet sich üblicherweise von der I/O-Schnittstelle des Steuergeräts, über die das Steuergerät mit dem technischen Prozess verbunden ist. Über diese Beeinflussungsschnittstelle ist es möglich, durch gezieltes Auslesen von Speicherzellen aus dem Steuergerät in das Beeinflussungsgerät und durch Schreiben von auf dem Beeinflussungsgerät berechneten Werten in den Speicher des Steuergeräts, Steuergerätefunktionen zu umgehen (Bypass), neue Funktionen auf dem Beeinflussungsgerät zu berechnen und das Steuergerät so durch diese Bypass-Operationen gezielt zu beeinflussen.

Der schreibende Zugriff auf den Speicher des Steuergeräts, mit dem lediglich Parameter bzw. Parametersätze, also Kennzahlen, -linien oder -felder verändert werden, die die interne Steuergerätefunktionen verwenden, wird häufig als Steuergeräte-Applikation bezeichnet. Sollen nicht nur Parameter von internen Funktionen des Steuergeräts, also im Speicher des Steuergeräts abgelegte Daten, sondern die im Steuergerät implementierten internen Funktionen selbst testweise verändert werden, kommt das Funktions-Bypassing zum Einsatz, bei dem das Steuergerät einem angeschlossenen, echtzeitfähigen Beeinflussungsgerät den Aufruf einer internen Steuergerätefunktion signalisiert, das Steuergerät selbst die Funktion jedoch nicht ausführt, sondern lediglich das Ergebnis der auf dem Beeinflussungsgerät ersatzweise berechneten Funktion entgegennimmt und weiter verwendet, es findet auf diese Art und Weise ein Bypass der Steuergeräte-Funktion statt.

In den beiden zuvor geschilderten Szenarien - Steuergeräte-Applikation und Funktions-Bypassing - ist es notwendig, einen besonderen Zugang zum Steuergerät in Form der bereits angesprochenen Bypass-Schnittstelle zu schaffen, über den eine Beobachtung und aktive Beeinflussung des Steuergeräts möglich ist. Im Stand der Technik ist es beispielsweise bekannt, eine parallele Schnittstelle zum Eingriff in die Hardware des Steuergeräts zu verwenden, über die das Beeinflussungsgerät wie ein Speicher-Emulator arbeitet. Das Beeinflussungsgerät wird über einen Adapter aufgenommen, der an die Stelle eines Speicherbausteins des Steuergeräts tritt, oder von einem extra dafür vorgesehenen Steckplatz auf der Platine des Steuergeräts und kann so auf den Adressund Datenbus des Steuergerät-Mikrocontrollers zugreifen. Das Beeinflussungsgerät selbst enthält dann als zentrales Element einen zweiseitig zugreifbaren Speicher (Dual-Port-Memory, DPMEM). Der zweiseitig zugreifbare Speicher kann nun seitens des Beeinflussungsgeräts gelesen und beschrieben werden, wobei die in den zweiseitig zugreifbaren Speicher des Beeinflussungsgeräts abgelegten Daten automatisch von dem Steuergerät-Mikrocontroller gelesen werden können, da sich der zweiseitig zugreifbare Speicher durch die Ankopplung an den Daten- und Adressbus des Steuergerät-Mikrocontrollers im Adressraum des Mikrocontrollers befindet.

Bei anderen Lösungen wird ein Datenaustausch zwischen Steuergerät und Beeinflussungsgerät über sogenannte Debug-Schnittstellen des Steuergeräts realisiert, die bei modernen Mikrocontrollern auf dem Chip bereits integriert sind (z. B. Nexus, JTAG).

Unabhängig von dem hardwaremäßigen Zugriff auf das Steuergerät muss das Steuergerät softwaremäßig für einen möglichen Einsatz des Bypassing vorbereitet werden, was dadurch geschieht, dass in dem Programmcode des Steuergeräts speziell für das Bypassing gedachte Service-Funktionen vorgesehen werden, so dass der Programmcode also mit diesen Service-Funktionen instrumentiert ist. Diese Service-Funktionen stehen häufig am Anfang und am Ende einer interessierender Steuergerätefunktion, sie können fest kodiert sein oder eine gewisse Flexibilität aufweisen, so dass sie aktiviert und deaktiviert werden können. Die Servicefunktionen kopieren beispielsweise Argumente interner Steuergerätefunktionen in das DPMEM, um sie von dort einem angeschlossenen Beeinflussungsgerät verfügbar zu machen, das diese Werte ausliest und einer auf dem Beeinflussungsgerät implementierten Funktionalität zuführt. Das Ergebnis der Berechnung auf dem Beeinflussungsgerät wird dann umgekehrt wieder in das DPMEM geschrieben und für die weitere interne Berechnung auf dem Steuergerät als Ergebnis für die umgangene interne Steuergerätefunktion verwendet.

Die DE 102 28 610 A1 offenbart ein Verfahren zum Überprüfen eines auf einer elektronischen Recheneinheit ablaufenden Steuerprogramms, bei dem mindestens eine Bypassfunktion durch dynamisches Linken an vorgegebene Schnittstellen angekoppelt wird. Eine in den Speicher der elektronischen Recheneinheit geladene Bypassroutine hat lesenden Zugriff auf statisch vorliegende Daten.

Aus der EP 2 881 858 A1 ist ein Verfahren zur Änderung der Software im Speicher eines elektronischen Steuergerätes bekannt, bei dem eine Bypassroutine im Arbeitsspeicher des Steuergeräts abgelegt und die Speicheradresse in einer Tabelle hinterlegt wird. Eine Servicefunktion liest die Adresse aus der Tabelle aus und ruft die Bypassroutine auf. Durch Löschung des Tabelleneintrags ist die Bypassroutine zur Laufzeit des Steuergeräts austauschbar. Die Informationen über die von der Programmroutine verarbeiteten Variablen stammen aus einer technischen Beschreibungsdatei, die unter anderem die Speicheradressen der Variablen enthält.

Die US 6 260 157 B1 offenbart ein Verfahren zum Patchen eines Nur-Lese-Speichers (ROM) eines Rechengeräts, welches eine im ROM hinterlegte Patch Engine und eine dazugehörige Datentabelle in einem beschreibbaren Speicher (RAM) verwendet. Nach Aufruf der Patch Engine lädt diese ein Patch Programm aus einem Daten-RAM in ein Programm-RAM und führt dieses aus. Der durch das Patch Programm ersetzte Code im ROM wird übersprungen.

Aus der DE 102 35 610 A1 ist ein Verfahren zum Überprüfen einer Steuergerätefunktion bekannt, bei dem eine in Software implementierte Funktion als Bypass-Programm in dem Steuergeräteprogramm eines Steuergeräts integriert und durch Aufruf zur Ausführung gebracht wird. Hierbei ist eine Bypass-Dienstroutine vorgesehen, die über eine in einer Bypass-Pointertabelle enthaltene Adresse das Bypass-Programm aufruft.

Die WO 2005/091089 A1 offenbart ein Beeinflussungsgerät für Steuergeräte mit einem Steuergerät-Microcontroller, das eine Beeinflussungsgerät-Debug-Schnittstelle zur Verbindung mit einer Steuergerät-Debug-Schnittstelle des Steuergeräts und einen Speicher für eine Adressliste und eine Datenliste umfasst. Aus den durch die Adressliste bestimmten Speicherorten im Adressraum des Microcontrollers können Daten ausgelesen und in der Datenliste abgelegt werden.

Im Rahmen des Bypassing ist es im Stand der Technik nicht möglich, mit den beschriebenen Mechanismen gezielt auf steuergeräteinterne Funktionen zuzugreifen. Behelfsweise wird dies dadurch gelöst, dass in den Programmcode des Steuergeräts diese internen Funktionen zyklisch aufgerufen und die Funktionsargumente bzw. Rückgabewerte mittels globaler Variablen dann transportiert werden. Dies erzwingt jedoch im Programmcode des Steuergeräts für jede Funktion und für jede möglicherweise gewünschte Aufrufposition dieser internen Steuergerätefunktion eine spezifische Anpassung des Steuergeräte-Programmcodes, was erhebliche Nachteile mit sich bringt hinsichtlich des Umfangs des Programmcodes und auch hinsichtlich der Beeinflussung des Laufzeitverhaltens des Programmcodes im Steuergerät.

Aufgabe der vorliegenden Erfindung ist es, ein Verfahren zum Betreiben eines Steuergeräts anzugeben, durch das es auf flexible Weise möglich ist, auch interne Steuergerätefunktionen beim externen Bypassing flexibel aufzurufen.

Die zuvor hergeleitete und aufgezeigte Aufgabe ist erfindungsgemäß bei dem eingangs beschriebenen Verfahren zum Betreiben eines Steuergerätes dadurch gelöst, dass auf dem Steuergerät eine Service-Konfiguration für die Service-Funktion bereitgestellt wird, dass die Service-Konfiguration in dem Steuergerät erfasst wird und dass bei Aufruf der Service-Funktion eines Service-Funktionalität entsprechend der Service-Konfiguration ausgeführt wird, wobei die Service-Konfiguration wenigstens eine interne Steuergerätefunktion bezeichnet, die als Service-Funktionalität der korrespondierenden Service-Funktion ausgeführt wird. Die Service-Funktion ist dazu eingerichtet, mit Hilfe der Service-Konfiguration wenigstens einen Wert für wenigstens ein Argument der internen Steuergerätefunktion im Steuergerät bereitzustellen und/oder wenigstens einen Rückgabewert der internen Steuergerätefunktion entgegenzunehmen.

Durch diese Verfahrensschritte ist es auf sehr einfache und elegante Weise möglich, von jeder beliebigen Service-Funktion eine beliebige interne Steuergeräte-Funktion aufzurufen. Die Zuweisung, welche Service-Funktion welche interne Steuergerätefunktion - oder auch eine Mehrzahl von Steuergerätefunktionen - aufruft, ist in der Service-Konfiguration enthalten. Die Service-Funktion und/oder die Service-Konfiguration enthalten zweckmäßigerweise einen ausführbaren Code, mittels dem die Übergabe der Argumente und/oder Rückgabewerte zur Laufzeit ermöglicht wird.

Unter einer internen Steuergerätefunktion sind hierbei solche Routinen des ursprünglichen Programmcodes zu verstehen, deren Aufruf die Übergabe eines oder mehrerer Argumente erfordert und/oder die ein oder mehrere Rückgabewerte ausgeben. Beispielsweise kann es sich um Set-Funktionen handeln, die ein oder mehrere Argumente entgegennehmen und anhand der übergebenen Werte einen oder mehrere Parameter des Programmcodes modifizieren, ohne dass die Adresse des jeweiligen Parameters bekannt sein muss. Ein weiteres Beispiel sind Get-Funktionen, die bei einem Aufruf einen oder mehrere Rückgabewerte liefern, wie insbesondere ein momentanes Sensorsignal. Prinzipiell können interne Steuergerätefunktionen sowohl mindestens ein Argument erfordern als auch mindestens einen Rückgabewert liefern. In diesem Fall ist die Servicefunktion zweckmäßigerweise dazu eingerichtet, vor dem Aufruf der internen Steuergerätefunktion die Argumente bereitzustellen und nach dem Aufruf die Rückgabewerte entgegenzunehmen. Optional kann die Servicefunktion dazu eingerichtet sein, einen oder mehrere Rückgabewerte an einer vorgegebenen Adresse im Arbeitsspeicher abzulegen, so dass insbesondere ein angeschlossenes Beeinflussungsgerät mit an sich bekannten Mechanismen auf diesen Wert zugreifen kann.

Argumente und/oder Rückgabewerte werden zweckmäßigerweise über einen Stack oder Heap übergeben, so dass die Speicheradresse der jeweiligen Variable sich dynamisch ändert. Die Werteübergabe kann in diesem Fall nur über relative Speicheradressen erfolgen, welche nicht global eindeutig sind, da weder die Startadresse noch die momentane Belegung des Stacks vorab bekannt ist und somit die Adresse nur relativ zum Stackpointer angegeben werden kann. Indem die Service-Funktion dazu eingerichtet ist, dem Mikroprozessor den ausführbaren Code zur Werteübergabe zuzuführen, können zur Laufzeit korrekte Speicheradressen ermittelt und der entsprechende Speicher mit den benötigten Werten beschrieben werden.

Alternativ oder ergänzend kann es auch vorgesehen sein, Argumente und/oder Rückgabewerte mittels eines lokalen Registers des Mikroprozessors des Steuergeräts auszutauschen. Dadurch, dass die Service-Funktion dem Mikroprozessor den ausführbaren Code zuführt, kann dieser selbst ein oder mehrere benötigte Argumente in die entsprechenden lokalen Register schreiben oder -nach Ausführung der internen Steuergerätefunktion - einen oder mehrere Rückgabewerte aus den entsprechenden lokalen Registern in den Arbeitsspeicher schreiben.

Gemäß einer bevorzugten Variante der Versorgung der internen Steuergerätefunktion mit Argumenten ist vorgesehen, dass in der Service-Konfiguration ausführbarer Code enthalten ist, der wenigstens einen Wert für wenigstens ein Argument der internen Steuergerätefunktion im Steuergerät bereitstellt. Dieses Vorgehen hat den Vorteil, dass lediglich der ausführbare Code aufgerufen werden muss, um den Aufruf der internen Steuergerätefunktion vorzubereiten. Dieser ausführbare Code kann beispielsweise mittels eines Cross-Compilers für die Steuergeräte-CPU anhand von Informationen über die Struktur des Programmcodes des Steuergeräts hergestellt worden sein (wie Header-Dateien). Insbesondere kann derselbe Cross-Compiler eingesetzt werden, mit dem auch der Programmcode des Steuergeräts selbst erstellt worden ist. Dem gleichen Prinzip folgend ist in einer weiteren Ausgestaltung alternativ oder ergänzend vorgesehen, dass in der Service-Konfiguration ausführbarer Code enthalten ist, der wenigstens einen Rückgabewerte der internen Steuergerätefunktion entgegennimmt. Dieser Rückgabewert könnte dann beispielsweise einem angeschlossenen Beeinflussungsgerät bereitgestellt werden.

Bei einer bevorzugten Ausgestaltung des Verfahrens zum Betreiben eines Steuergeräts wird davon ausgegangen, dass die Service-Funktion dazu eingerichtet ist, Funktionen mit vorbestimmten Mustern von Argumenten und/oder Rückgabewerten aufzurufen. Mit einem solchen Muster sind praktisch die Angaben gemeint, die üblicherweise von einer Funktionsdeklaration umfasst sind. Die Angabe "double f(char, int, int)" beschreibt beispielsweise eine Funktion f mit einem Rückgabewert vom Typ double, die mit drei Argumenten zu versorgen ist, wobei das erste Argument ein Zeichen (character) ist und wobei das zweite und das dritte Argument jeweils ein Integer-Wert ist. Die Service-Funktion ist nun so eingerichtet, dass sie zum Aufruf von Funktionen mit bestimmten Mustern von Argumenten und/oder Rückgabewerten vorbereitet ist. Die Service-Konfiguration bezeichnet dann die interne Steuergerätefunktion (oder gegebenenfalls mehrerer Steuergerätefunktionen) durch Angabe des vorbestimmten Musters und durch Angabe der Startadresse der internen Steuergerätefunktion. Durch diese Angaben ist eindeutig festgelegt, welche interne Steuergerätefunktion bzw. welche internen Steuergerätefunktionen bei Aufruf der Service-Funktion aufgerufen wird bzw. aufgerufen werden.

Die Service-Funktion des Steuergeräts kann beispielsweise zyklisch in einem festen Zeitraster ausgeführt werden, dann ist sie in dem üblicherweise im Steuergerät zum Einsatz kommenden Echtzeitbetriebssystem als Timer-Task aufgesetzt oder wird im Rahmen einer solchen Timer-Task - neben anderen Funktionen - aufgerufen. Es ist auch möglich, dass die Service-Funktion azyklisch ausgeführt wird, sie kann durch ein externes Ereignis getrieben sein, wie beispielsweise ein Ereignis in dem technischen Prozess, mit dem das Steuergerät über die I/O-Schnittstelle verbunden ist. Es ist also durchaus denkbar, dass eine bestimmte Service-Funktion nur sehr selten oder nur ein einziges Mal aufgerufen wird.

Wenn es heißt, dass die Service-Konfiguration in dem Steuergerät erfasst wird, dann ist damit gemeint, dass die in der Service-Konfiguration enthaltene Korrespondenz von Service-Funktion und interner Steuergerätefunktion bzw. internen Steuergerätefunktionen durch eine in dem Steuergerät implementierte Auswertefunktion erkannt - also sinngebend erfasst - wird und die in der Service-Konfiguration enthaltene Korrespondenz an der Stelle der Service-Funktion in den entsprechenden Aufruf der internen Steuergerätefunktion umgesetzt werden muss. Die Bereitstellung der Service-Konfiguration auf dem Steuergerät kann einfach dadurch geschehen, dass die Service-Konfiguration in einem dafür vorgesehenen Speicherbereich des Steuergeräts abgespeichert wird. Das Bereitstellen der Service-Konfiguration könnte aber auch von extern erfolgen.

In einer bevorzugten Ausgestaltung ist vorgesehen, dass das Steuergerät über eine Schnittstelle mit einem Beeinflussungsgerät verbunden ist und von dem Beeinflussungsgerät über die Schnittstelle die Service-Konfiguration auf das Steuergerät übertragen und auf dem Steuergerät abgespeichert wird. In einer alternativen Ausgestaltung ist vorgesehen, dass das Steuergerät zwar auch über eine Schnittstelle mit einem Beeinflussungsgerät verbunden ist und von dem Beeinflussungsgerät über die Schnittstelle die Service-Konfiguration auf das Steuergerät übertragen wird, hier jedoch keine dauerhafte Abspeicherung der Service-Konfiguration erfolgt, die Service-Konfiguration vielmehr sofort in dem Steuergerät erfasst und an der Stelle der Service-Funktion sofort ein der Service-Konfiguration entsprechender Aufruf der internen Steuergerätefunktion implementiert wird. So könnte realisiert werden, dass nicht bei jedem Aufruf einer Service-Funktion zunächst die entsprechenden Informationen aus der Service-Konfiguration ausgelesen und erfasst werden müssen, um als Service-Funktionalität der Service-Funktion die zugewiesene interne Steuergerätefunktion aufzurufen. Es könnte beispielsweise dafür gesorgt werden, dass das Auslesen und Erfassen der Service-Konfiguration erst dann wieder erfolgt, wenn sich die Service-Konfiguration geändert hat, was beispielsweise durch das Setzen eines bestimmten Flags auf dem Steuergerät signalisiert werden könnte.

Bevorzugt ist vorgesehen, dass in der Service-Konfiguration wenigstens ein Speicherort angegeben wird, wo wenigstens ein Wert für ein Argument oder mehrere Argumente der internen Steuergerätefunktion im Steuergerät hinterlegt wird und/oder wo wenigstens ein Rückgabewert der internen Steuergerätefunktion im Steuergerät hinterlegt wird. Durch diese Maßnahme ist sichergestellt, dass der Service-Funktion bekannt ist, wo sie ein Argument - oder natürlich auch mehrere Argumente - für die aufzurufende interne Steuergerätefunktion - oder auch mehrere aufzurufende interne Steuergerätefunktionen - erhält und wo sie ggf. einen Rückgabewert - oder natürlich auch mehrere Rückgabewerte - der internen Steuergerätefunktion im Steuergerät zur weiteren Verwendung ablegt. Wenn die Service-Konfiguration von einem angeschlossenen Beeinflussungsgerät stammt, ist selbstverständlich auch auf dem Beeinflussungsgerät bekannt, wo die Argumente der internen Steuergerätefunktion im Steuergerät abzulegen sind und wo ggf. Rückgabewerte einer internen Steuergerätefunktion im Steuergerät aufzufinden sind, wenn diese beispielsweise für eine weitere Berechnung benötigt werden.

In einer Weiterentwicklung des vorgenannten Verfahrens ist vorgesehen, dass der Speicherort für ein Argument der internen Steuergerätefunktion überwacht wird und die interne Steuergerätefunktion erst dann mit dem im Speicherort hinterlegten Wert für das Argument aufgerufen wird, wenn der Speicherort mit einem aktuellen Wert für das Argument beschrieben worden ist. Dadurch wird eine automatische Synchronisation mit einem externen Bypass-Prozess ermöglicht, wobei die Überwachung des Speicherorts nicht zwingend bedeuten muss, dass nur die Änderung des Inhalts des Speicherorts detektiert wird, es kann vielmehr auch auf den Schreibvorgang in den Speicherort abgestellt werden, unabhängig davon, ob sich der Inhalt des Speicherortes bei dem Schreibvorgang geändert hat oder nicht.

Eine für das externe Bypassing ebenfalls wichtige Ausgestaltung des bisher beschriebenen Verfahrens ist, dass das Steuergerät über eine Schnittstelle mit einem Beeinflussungsgerät verbunden ist und das Steuergerät über die Schnittstelle den Rückgabewert der internen Steuergerätefunktion an das Beeinflussungsgerät überträgt und/oder das Beeinflussungsgerät den Rückgabewert der internen Steuergerätefunktion über die Schnittstelle aus dem Steuergerät ausliest. So kann durch das Beeinflussungsgerät nicht nur der Aufruf einer internen Steuergerätefunktion veranlasst werden, es kann vielmehr auch in dem Beeinflussungsgerät mit dem Ergebnis des Aufrufs der internen Steuergerätefunktion gearbeitet werden. Ein so eingesetztes Beeinflussungsgerät ist also Ort einer ausgelagerten Funktionalität bzw. einer Bypass-Funktionalität. Dieses Beeinflussungsgerät kann ein anderes Beeinflussungsgerät sein als das zuerst erwähnte Beeinflussungsgerät, mit dem die Service-Konfiguration auf das Steuergerät übertragen wird. Die Funktionalitäten können aber auch in einem einzigen Beeinflussungsgerät realisiert sein, darauf kommt es erkennbar nicht an.

Eine weitere Maßnahme für eine vorteilhafte Weiterentwicklung des Verfahrens, insbesondere im Hinblick auf das Bypassing, ist dadurch gekennzeichnet, dass das Steuergerät über eine Schnittstelle mit einem Beeinflussungsgerät verbunden ist und im Beeinflussungsgerät Programmcode mit wenigstens einer Beeinflussungsgerätefunktion hinterlegt ist, die Service-Konfiguration den Aufruf einer Beeinflussungsgerätefunktion umfasst und bei Aufruf der entsprechenden Service-Funktion das Steuergerät über die Schnittstelle dem Beeinflussungsgerät den Aufruf der Beeinflussungsgerätfunktion signalisiert und das Beeinflussungsgerät die Beeinflussungsgerätfunktion ausführt. Dadurch kann von dem Steuergerät in dem Beeinflussungsgerät gezielt eine Beeinflussungsgerätefunktion aufgerufen - getriggert - werden, so dass Steuergerät und Beeinflussungsgerät funktional und zeitlich eng miteinander verzahnt sind.

In Bezug auf das Verfahren mit der Beeinflussungsgerätfunktion hat es sich als vorteilhaft herausgestellt, wenn in der Service-Konfiguration ein Speicherort angegeben wird, wo ein Wert für ein Argument der Beeinflussungsgerätfunktion im Steuergerät hinterlegt wird und/oder wo ein Rückgabewert der Beeinflussungsgerätfunktion im Steuergerät hinterlegt wird. Diese Funktionalität ist unabhängig von dem Aufruf der internen Steuergerätfunktion und gewährleistet die sichere Versorgung der Beeinflussungsgerätfunktion mit den richtigen Argumenten und gewährleistet ferner, dass das Ergebnis der Berechnung der Beeinflussungsgerätfunktion auf dem Steuergerät an der richtigen Stelle zur Verfügung gestellt wird.

In dem vorgenannten Zusammenhang wird wiederum eine Synchronisation hergestellt zwischen dem Steuergerät und dem Beeinflussungsgerät, indem der Speicherort für ein Argument der Beeinflussungsgerätfunktion von dem Beeinflussungsgerät über die Schnittstelle überwacht wird und die Beeinflussungsgerätfunktion erst dann mit dem im Speicherort hinterlegten Wert für das Argument aufgerufen wird, wenn der Speicherort mit einem aktuellen Wert für das Argument beschrieben worden ist.

Die zuvor aufgezeigte Aufgabe wird auch durch ein zum externen Bypassing eingerichtetes Steuergerät gelöst, wobei das Steuergerät über eine I/O-Schnittstelle mit einem technischen Prozess verbunden ist, wobei auf dem Steuergerät Programmcode mit internen Steuergerätefunktionen hinterlegt ist, wobei der Programmcode mit wenigstens einer Service-Funktion instrumentiert ist und wobei bei Ausführung des Programmcodes das Steuergerät über die I/O-Schnittstelle Steuersignale an dem technischen Prozess ausgibt und über die I/O-Schnittstelle Zustandsgrößen des technischen Prozesses als Signale empfängt. Das zum externen Bypassing eingerichtete Steuergerät zeichnet sich letztlich dadurch aus, dass auf dem Steuergerät eines Service-Konfiguration für die Service-Funktion bereitgestellt ist, dass die Service-Konfiguration in dem Steuergerät bei Betrieb des Steuergeräts erfasst wird und bei Aufruf des Service-Funktion eines Service-Funktionalität entsprechend der Service-Konfiguration ausgeführt wird, wobei die Service-Konfiguration eine interne Steuergerätefunktion bezeichnet, die als Service-Funktionalität der korrespondierenden Service-Funktion ausgeführt wird, sodass durch Bereitstellen der Service-Konfiguration auf dem Steuergerät flexibel auf dem verbundenen technischen Prozess eingewirkt wird. Das Steuergerät zeichnet sich ferner dadurch aus, dass das zuvor beschriebene Verfahren in dem Betriebszustand des Steuergeräts entsprechend auf dem Steuergerät durchgeführt wird.

Im Einzelnen gibt es nun mehrere Möglichkeiten, das erfindungsgemäße Verfahren zum Betreiben eines Steuergeräts und das erfindungsgemäße Steuergerät, das zum externen Bypassing eingerichtet ist, auszugestalten und weiterzubilden. Dazu wird verwiesen sowohl auf die dem Patentanspruch 1 und dem Patentanspruch 9 nachgeordneten Patentansprüche als auch auf die Beschreibung der in der Zeichnung dargestellten Ausführungsbeispiele. In der Zeichnung zeigen
- Fig. 1: ein erstes Ausführungsbeispiel für ein zum externen Bypassing eingerichtetes Steuergerät sowie ein Verfahren zum Betreiben eines solchen Steuergeräts,
- Fig. 2: wiederum ein zum externen Bypassing eingerichtetes Steuergerät, diesmal mit einem angeschlossenen Beeinflussungsgerät,
- Fig. 3: ein zum externen Bypassing eingerichtetes Steuergerät mit angeschlossenem Beeinflussungsgerät und einer vollständigen Sequenz für das Bypassing und
- Fig. 4: das Ausführungsbeispiel gemäß Fig. 3 mit einer weiteren Synchronisation zur Ablaufsteuerung auf dem Steuergerät.

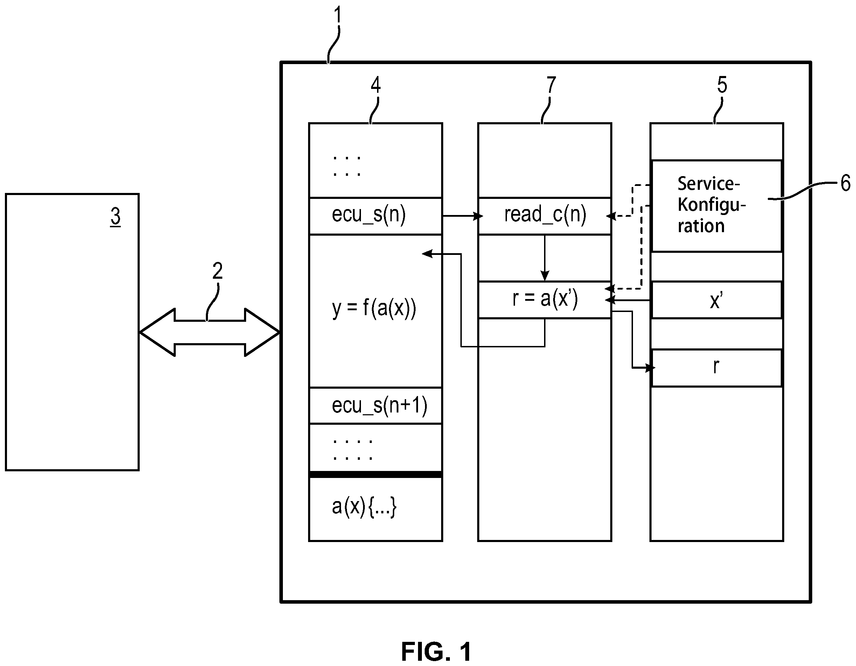

In Fig. 1 ist zunächst die typische Situation für den Einsatz eines Steuergeräts 1 dargestellt, wobei das Steuergerät 1 über eine I/O-Schnittstelle 2 mit einem technischen Prozess 3 verbunden ist. Über die I/O-Schnittstelle 2 steht das Steuergerät 1 in dauerndem Wirkzusammenhang mit dem technischen Prozess 3, wobei es Stellgrößen an Aktoren innerhalb des technischen Prozesses 3 ausgibt und so den technischen Prozess 3 aktiv beeinflusst, und wobei das Steuergerät 1 über die I/O-Schnittstelle 2 über Sensoren von dem technischen Prozess 3 Messdaten erhält und diese Messdaten beispielsweise in die Berechnung neuer Stellgrößen einfließen lässt. Das Steuergerät umfasst mindestens einen Mikroprozessor mit einem oder mehreren Kernen, der auch als IP-Core auf einen programmierbaren Logikbaustein implementiert sein kann.

Auf dem Steuergerät 1 ist Programmcode 4 mit internen Steuergerätefunktionen hinterlegt, wobei in den Fig. 1 bis 4 jeweils die internen Steuergerätefunktion f() und a() dargestellt sind. Der Programmcode 4 ist darüber hinaus mit Service-Funktionen instrumentiert, wobei die Service-Funktionen in den Fig. 1 bis 4 jeweils mit "ecu_s(n)" und "ecu_s(n+1)" bezeichnet sind.

In dem Programmcode 4 des Steuergeräts 1 ist eine originäre Funktionalität f() definiert, deren Berechnung zu dem Ergebnis y führt. Das Argument der Funktion f() wird von der internen Steuergerätefunktion a() geliefert, die ihrerseits das Argument x verwendet. Diese in dem Programmcode fest implementierte Steuergerätefunktion f() ist umgeben von den Service-Funktionen ecu_s(n) und ecu_s(n+1). Diese die Steuergerätefunktion f() umgebenden Service-Funktionen ecu_s(n), ecu_s(n+1) ermöglichen grundsätzlich die Umgehung der Steuergerätefunktion f().

Die Service-Funktionen ecu_s() im Programmcode 4 des Steuergeräts 1 dienen vor allem zur Realisierung der planmäßigen Beeinflussung des Steuergeräts 1 durch Bypasssing. In den hier dargestellten Ausführungsbeispielen wird es nun ermöglicht, dass auch interne Steuergerätfunktionen a() praktisch von jeder beliebigen Service-Funktion ecu_s() aufgerufen werden können, wobei dies insbesondere auch durch das externe Bypassing ermöglicht wird.

Dazu ist vorgesehen, dass auf dem Steuergerät 1 - beispielsweise im RAM 5 des Steuergeräts 1 - eine Service-Konfiguration 6 bereitgestellt wird und dass diese Service-Konfiguration 6 in dem Steuergerät 1 durch einen Algorithmus sinngebend erfasst wird, sodass bei Aufruf der Service-Funktion ecu_s() eine Service-Funktionalität entsprechend der Service-Konfiguration 6 ausgeführt wird, wobei die Service-Konfiguration 6 wenigstens eine interne Steuergerätefunktion a() bezeichnet, die als Service-Funktionalität der korrespondierenden Service-Funktion ecu_s() ausgeführt wird. In den dargestellten Ausführungsbeispielen enthält die Service-Konfiguration 6 die Information, dass die Service-Funktion ecu_s(n) die interne Steuergerätefunktion a(x) aufruft, wobei im vorliegenden Fall der Aufruf mit dem Argument x' erfolgen soll. Die Service-Konfiguration 6 enthält also eine Korrespondenzliste, die einer Service-Funktion ecu_s(i) eine beliebige interne Steuergerätefunktion a_i() oder auch mehrere beliebige interne Steuergerätefunktionen a_i() zuordnen kann, sodass in dem Programmcode 4 des Steuergeräts 1 praktisch an allen Stellen, an denen eine Service-Funktion ecu_s() vorgesehen ist, eine oder mehrere beliebige interne Steuergerätefunktionen a() aufgerufen werden kann/können.

Das Erfassen der Service-Konfiguration 6 erfolgt im dargestellten Ausführungsbeispiel über das Auslesen der entsprechenden Korrespondenz aus der Service-Konfiguration 6 zu der Service-Funktion ecu_s(n). In den Ausführungsbeispielen ist dieses Auslesen der Korrespondenz aus der Service-Konfiguration als "read_c(n)" bezeichnet. Das Auslesen der Service-Konfiguration 6 führt dann zu dem Ergebnis, dass die interne Steuergerätefunktion a(x) mit dem Argument x', ausgeführt werden soll. Die mit dem Auslesen der Service-Konfiguration 6 verbundenen Vorgänge (z. B. read_n) und die Umsetzung der in der Service-Konfiguration 6 enthaltenen Informationen in Anweisungen (z. B. r=a(x')) ist in den Figuren jeweils in den Bypassing-Services 7 dargestellt. In den Ausführungsbeispielen gemäß den Fig. 1 bis 4 ist der Programmcode 4 und sind die Bypassing-Services 7 in dem Flash-Speicher des Steuergeräts 1 angesiedelt und sind die Service-Konfiguration 6 und später erläuterte Austauschspeicher in dem RAM 5 realisiert.

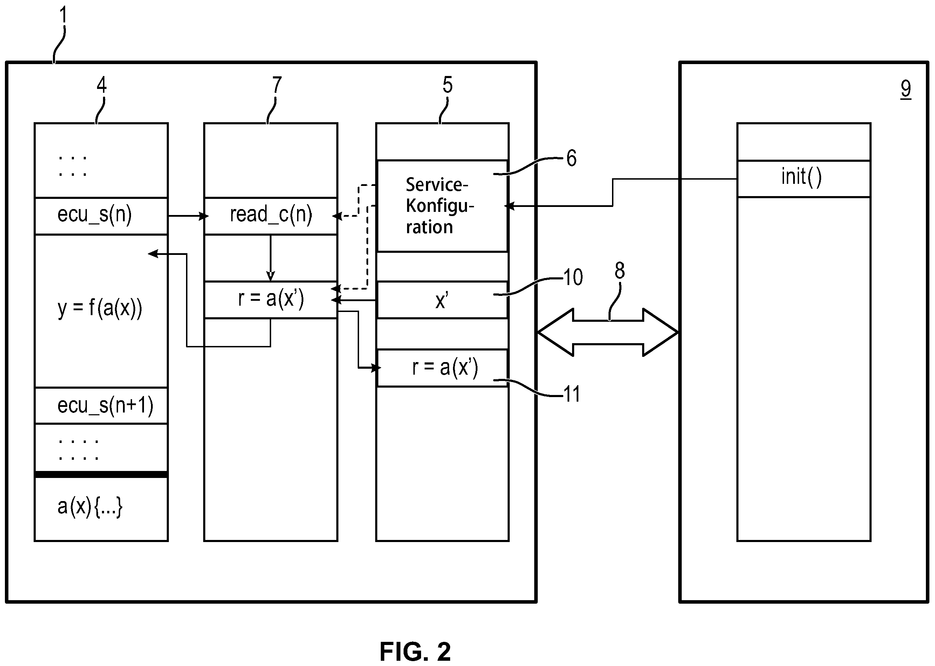

In den Fig. 2 bis 4 ist der physikalische Prozess 3 nicht mehr dargestellt, wie er noch in Fig. 1 zu sehen ist. Dafür ist in den Fig. 2 bis 4 jeweils dargestellt eine Schnittstelle 8, über die das Steuergerät 1 mit einem Beeinflussungsgerät 9 verbunden ist.

In Fig. 2 ist zu erkennen, dass von dem Beeinflussungsgerät 9 über die Schnittstelle 8 die Service-Konfiguration 6 auf das Steuergerät 1 übertragen und auf dem Steuergerät 1 abgespeichert wird; dieser Vorgang ist durch einen Pfeil angedeutet. Idealerweise geschieht dies während der Initialisierung des Steuergeräts 1 durch das Beeinflussungsgerät 9, was durch die Funktion "init()" angedeutet ist.

In den Fig. 2 bis 4 ist ferner dargestellt, dass die Service-Konfiguration 6 auch Speicherorte 10, 11 angibt, in denen ein Wert x' für ein Argument der internen Steuergerätefunktion a() im Steuergerät 1 hinterlegt wird, und wo ein Rückgabewert r der internen Steuergerätefunktion a() im Steuergerät 1 hinterlegt wird. Diese Speicherorte 10, 11 können insbesondere als Austauschspeicher dienen, über die das Steuergerät 1 und das Beeinflussungsgerät 9 Argumente x' und Ergebnisse r der internen Steuergerätefunktion a() austauschen können.

Bei den in den Steuergeräten 1 implementierten Verfahren ist im Rahmen der Bypass-Services 7 vorgesehen, dass der Speicherort 10 für ein Argument x' der internen Steuergerätefunktion a() überwacht wird und die interne Steuergerätefunktion a() erst dann mit dem im Speicherort 10 hinterlegten Wert für das Argument x' aufgerufen wird, wenn der Speicherort 10 mit einem aktuellen Wert für das Argument x' beschrieben worden ist. Dadurch ist gewährleistet, dass die interne Steuergerätefunktion a() immer mit einem aktuellen Argument x' berechnet wird.

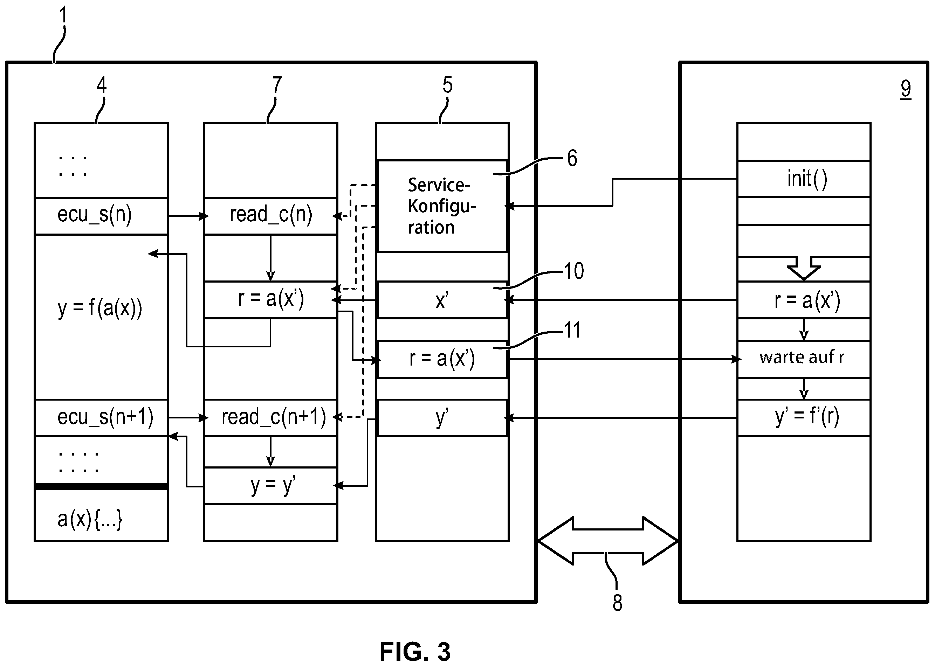

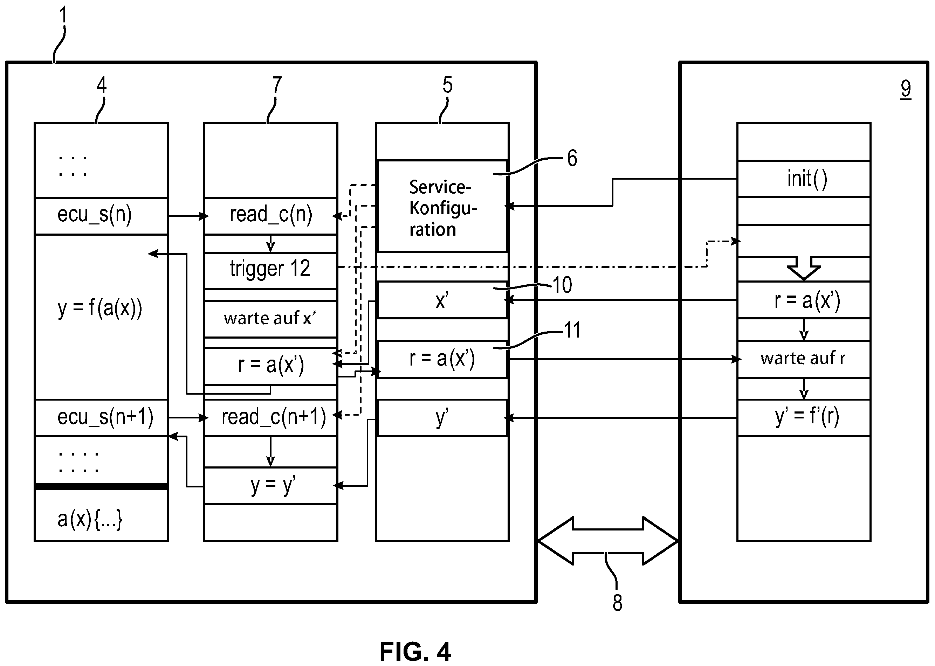

In den Fig. 3 und 4 ist die Erweiterung des bisher geschilderten Verfahrens dargestellt, sodass ein vollständiges Bypassing realisiert ist unter Aufruf der internen Steuergerätefunktion a() durch das externe Beeinflussungsgerät 9. Dazu gehört, dass das Steuergerät 1 über die Schnittstelle 8 mit dem Beeinflussungsgerät 9 verbunden ist und das Steuergerät 1 über die Schnittstelle 8 den Rückgabewert r der internen Steuergerätefunktion a() an das Beeinflussungsgerät 9 überträgt. Alternativ kann das Beeinflussungsgerät 9 den Rückgabewert r der internen Steuergerätefunktion a() über die Schnittstelle 8 aus dem Steuergerät 1 auslesen. In dem dargestellten Verfahren wird die interne Steuergerätefunktion a() unter Verwendung des Arguments x', das in dem Speicherort 10 hinterlegt ist, berechnet.

In den Fig. 3 und 4 weist das Beeinflussungsgerät 9 Programmcode mit einer Beeinflussungsgerätfunktion f'() auf. Die Beeinflussungsgerätfunktion f'() ist dazu gedacht, die Berechnung der in dem Steuergerät 1 im Programmcode 4 vorhandenen originären Steuergerätfunktion f() zu modifizieren. Während die Berechnung der internen Steuergerätefunktion f() zum Ergebnis y führt, führt die Berechnung der Beeinflussungsgerätfunktion f'() zu dem modifizierten Ergebniswert y'.

In Fig. 4 ist in diesem Zusammenhang dargestellt, dass die Servicekonfiguration 6 den Aufruf 12 ("trigger") der Beeinflussungsgerätfunktion f'() umfasst und bei Aufruf der entsprechenden Service-Funktion, in diesem Fall der Service-Funktion ecu_s(n), das Steuergerät 1 über die Schnittstelle 8 dem Beeinflussungsgerät 9 den Aufruf 12 der Beeinflussungsgerätfunktion f'(), signalisiert, woraufhin das Beeinflussungsgerät 9 die Beeinflussungsgerätfunktion f'() ausführt. So kann sichergestellt werden, dass das Steuergerät 1 Beeinflussungsgerätfunktionen f'() auf dem Steuergerät 9 aktiv auslösen, also triggern kann.

Zu der Durchführung des Bypassing gehört in den Verfahren gemäß den Figuren 3 und 4 auch, dass in der Service-Konfiguration 6 ein Speicherort 11 angegeben wird, wo ein Wert für ein Argument r der Beeinflussungsgerätfunktion f'() im Steuergerät 1 hinterlegt wird und wo ein Rückgabewert y' der Beeinflussungswertfunktion f'() im Steuergerät 1 hinterlegt wird. In beiden dargestellten Verfahren wird letztendlich der Wert y, der das Ergebnis der originären Steuergerätfunktion f() ist, durch den modifizierten Wert y', der aus der Berechnung der Beeinflussungsgerätfunktion f'() resultiert, ersetzt, womit das Bypassing der originären Steuergerätfunktion f() abgeschlossen ist.

In den dargestellten Verfahren ist ferner vorgesehen, dass der Speicherort 11 für das Argument r der Beeinflussungsgerätfunktion f'() von dem Beeinflussungsgerät 9 über die Schnittstelle 8 überwacht wird und die Beeinflussungsgerätfunktion f'() erst dann mit dem im Speicherort 11 hinterlegten Wert für das Argument r aufgerufen wird, wenn der Speicherort 11 mit einem aktuellen Wert für das Argument r beschrieben worden ist; dies ist in den Figuren angedeutet durch den Verfahrensschritt "wait for r". Dadurch kann die Berechnung der Beeinflussungsgerätfunktion f'() praktisch ereignisgetrieben angestoßen werden.

## Patentansprüche

1. Verfahren zum Betreiben eines Steuergeräts (1), wobei auf dem Steuergerät (1) Programmcode (4) mit fest implementierten internen Steuergerätefunktionen (a()) hinterlegt ist, wobei der Programmcode (4) mit wenigstens einer Service-Funktion (ecu_s()) instrumentiert ist, wobei das Steuergerät zum Bypassing über eine Schnittstelle (8) mit einem Beeinflussungsgerät (9) verbunden ist, wobei auf dem Steuergerät (1) eine Service-Konfiguration (6) für die Service-Funktion (ecu_s()) bereitgestellt wird, wobei die Service-Konfiguration (6) in dem Steuergerät (1) erfasst wird und wobei bei Aufruf der Service-Funktion (ecu_s()) eine Service-Funktionalität entsprechend der Service-Konfiguration (6) ausgeführt wird, **dadurch gekennzeichnet, dass** die Service-Konfiguration (6) wenigstens eine interne Steuergerätefunktion (a()) bezeichnet, die als Service-Funktionalität der korrespondierenden Service-Funktion (ecu_s()) ausgeführt wird, wobei die Service-Funktion (ecu_s()) mit Hilfe der Service-Konfiguration (6) wenigstens einen Wert (x') für wenigstens ein Argument der internen Steuergerätefunktion (a()) im Steuergerät (1) bereitstellt und/oder wenigstens einen Rückgabewert der internen Steuergerätefunktion (a()) entgegennimmt.

2. Verfahren nach Anspruch 1, **dadurch gekennzeichnet, dass** in der Service-Konfiguration (6) ausführbarer Code enthalten ist, der wenigstens einen Wert (x') für wenigstens ein Argument der internen Steuergerätefunktion (a()) im Steuergerät (1) bereitstellt und/oder der wenigstens einen Rückgabewert der internen Steuergerätefunktion (a()) entgegennimmt.

3. Verfahren nach Anspruch 1 oder 2, **dadurch gekennzeichnet, dass** die Service-Funktion (ecu_s()) dazu eingerichtet ist, Funktionen mit vorbestimmten Mustern von Argumenten und/oder Rückgabewerten aufzurufen, wobei die Service-Konfiguration (6) die interne Steuergerätefunktion (a()) durch Angabe des vorbestimmten Musters und durch Angabe der Startadresse der internen Steuergerätefunktion (a()) bezeichnet.

4. Verfahren nach einem der Ansprüche 1 bis 3, **dadurch gekennzeichnet, dass** von dem Beeinflussungsgerät (9) über die Schnittstelle (8) die Service-Konfiguration (6) auf das Steuergerät (1) übertragen und auf dem Steuergerät (1) abgespeichert wird.

5. Verfahren nach einem der Ansprüche 1 bis 4, **dadurch gekennzeichnet, dass** in der Service-Konfiguration (6) wenigstens ein Speicherort (10, 11) angegeben wird, wo wenigstens ein Wert (x') für wenigstens ein Argument der internen Steuergerätefunktion (a()) im Steuergerät (1) hinterlegt wird und/oder wo wenigstens ein Rückgabewert (r) der internen Steuergerätefunktion (a()) im Steuergerät (1) hinterlegt wird.

6. Verfahren nach Anspruch 5, **dadurch gekennzeichnet, dass** der Speicherort (10) für ein Argument (x') der internen Steuergerätefunktion (a()) überwacht wird und die interne Steuergerätefunktion (a()) erst dann mit dem im Speicherort (10) hinterlegten Wert für das Argument (x') aufgerufen wird, wenn der Speicherort (10) mit einem aktuellen Wert für das Argument (x') beschrieben worden ist.

7. Verfahren nach einem der Ansprüche 1 bis 6, **dadurch gekennzeichnet, dass** das Steuergerät (1) über die Schnittstelle (8) den Rückgabewert (r) der internen Steuergerätefunktion (a()) an das Beeinflussungsgerät (9) überträgt und/oder das Beeinflussungsgerät (9) den Rückgabewert (r) der internen Steuergerätefunktion (a()) über die Schnittstelle (8) aus dem Steuergerät (1) ausliest.

8. Verfahren nach einem der Ansprüche 1 bis 7, **dadurch gekennzeichnet, dass** im Beeinflussungsgerät (9) Programmcode mit wenigstens einer Beeinflussungsgerätfunktion (f'()) hinterlegt ist, die Service-Konfiguration (6) den Aufruf (12) einer Beeinflussungsgerätfunktion (f'()) umfasst und bei Aufruf (12) der entsprechenden Service-Funktion (ecu_s()) das Steuergerät (1) über die Schnittstelle (8) dem Beeinflussungsgerät (9) den Aufruf (12) der Beeinflussungsgerätfunktion (f'()) signalisiert und das Beeinflussungsgerät (9) die Beeinflussungsgerätfunktion (f'()) ausführt.

9. Verfahren nach Anspruch 8, **dadurch gekennzeichnet, dass** in der Service-Konfiguration (6) ein Speicherort (11) angegeben wird, wo ein Wert für ein Argument (r) der Beeinflussungsgerätfunktion (f'()) im Steuergerät (1) hinterlegt wird und/oder wo ein Rückgabewert (y') der Beeinflussungsgerätfunktion (f'()) im Steuergerät (1) hinterlegt wird.

10. Verfahren nach Anspruch 9, **dadurch gekennzeichnet, dass** der Speicherort (11) für das Argument (r) der Beeinflussungsgerätfunktion (f'()) von dem Beeinflussungsgerät (9) über die Schnittstelle (8) überwacht wird und die Beeinflussungsgerätfunktion (f'()) erst dann mit dem im Speicherort (11) hinterlegten Wert für das Argument (r) aufgerufen wird, wenn der Speicherort (11) mit einem aktuellen Wert für das Argument (r) beschrieben worden ist.

11. Zum externen Bypassing eingerichtetes Steuergerät (1), wobei das Steuergerät (1) über eine I/O-Schnittstelle (2) mit einem technischen Prozess (3) verbunden ist, wobei auf dem Steuergerät (1) Programmcode (4) mit internen Steuergerätefunktionen (a()) hinterlegt ist, wobei der Programmcode (4) mit wenigstens einer Service-Funktion (ecu_s()) instrumentiert ist und wobei bei Ausführung des Programmcodes (4) das Steuergerät (1) über die I/O-Schnittstelle (2) Steuersignale an dem technischen Prozess (3) ausgibt und über die I/O-Schnittstelle (2) Zustandsgrößen des technischen Prozesses (3) als Signale empfängt, wobei auf dem Steuergerät (1) eine Service-Konfiguration (6) für die Service-Funktion (ecu_s) bereitgestellt ist, wobei die Service-Konfiguration (6) in dem Steuergerät (1) bei Betrieb des Steuergeräts (1) erfasst wird und bei Aufruf der Service-Funktion (ecu_s()) eine Service-Funktionalität entsprechend der Service-Konfiguration (6) ausgeführt wird, **dadurch gekennzeichnet, dass** die Service-Konfiguration (6) wenigstens eine interne Steuergerätefunktion (a()) bezeichnet, die als Service-Funktionalität der korrespondierenden Service-Funktion (ecu_s()) ausgeführt wird, sodass durch Bereitstellen der Service-Konfiguration (6) auf dem Steuergerät (1) flexibel auf den verbundenen technischen Prozess (3) eingewirkt wird, wobei die Service-Funktion (ecu_s()) mit Hilfe der Service-Konfiguration (6) wenigstens einen Wert (x') für wenigstens ein Argument der internen Steuergerätefunktion (a()) im Steuergerät (1) bereitstellt und/oder der wenigstens einen Rückgabewert der internen Steuergerätefunktion (a()) entgegennimmt.

12. Steuergerät (1) nach Anspruch 11, **dadurch gekennzeichnet, dass** es so programmiert ist, dass es im Betriebszustand, also bei Ausführung des Programmcodes (4), ein Verfahren nach einem der Patentansprüche 2 bis 10 ausführt.

## Claims

1. A method for operating a control device (1), program code (4) having permanently implemented internal control device functions (a()) being stored on the control device (1), the program code (4) being instrumented with at least one service function (ecu_s()), the control device being connected to an influencing device (9) by means of an interface (8) for bypassing, a service configuration (6) for the service function (ecu_s()) being provided on the control device (1), the service configuration (6) being captured in the control device (1) and a service functionality being executed according to the service configuration (6) when the service function (ecu_s()) is called, **characterized in that** the service configuration (6) designates at least one internal control device function (a()) implemented as a service functionality of the corresponding service function (ecu_s()), wherein the service function (ecu_s()) provides at least one value (x') for at least one argument of the internal control device function (a()) in the control device (1) by means of the service configuration (6) and/or accepts at least one return value of the internal control device function (a()).

2. The method according to claim 1, **characterized in that** executable code present in the service configuration (6) provides at least one value (x') for at least one argument of the internal control device function (a()) in the control device (1) and/or accepts at least one return value of the internal control device function (a()).

3. The method according to claim 1 or 2, **characterized in that** the service function (ecu_s()) is set up for calling functions having predetermined patterns of arguments and/or return values, wherein the service configuration (6) designates the internal control device function (a()) by indicating the predetermined pattern and by indicating the starting address of the internal control device function (a()).

4. The method according to any one of the claims 1 through 3, **characterized in that** the service configuration (6) is transferred to the control device (1) from the influencing device (9) by means of the interface (8) and is saved on the control device (1).

5. The method according to any one of the claims 1 through 4, **characterized in that** at least one value (x') for at least one argument of the internal control device function (a()) is stored in the control device (1), and/or at least one return value (r) of the internal control device function (a()) is stored in the control device (1), in at least one memory location (10, 11) indicated in the service configuration (6).

6. The method according to claim 5, **characterized in that** the memory location (10) for an argument (x') of the internal control device function (a()) is monitored and the internal control device function (a()) is called using value stored in the memory location (10) for the argument (x') only if the memory location (10) has been written with a current value for the argument (x').

7. The method according to any one of the claims 1 through 6, **characterized in that** the control device (1) transfers the return value (r) of the internal control device function (a()) to the influencing device (9) by means of the interface (8) and/or the influencing device (9) reads the return value (r) of the internal control device function (a()) from the control device (1) by means of the interface (8).

8. The method according to any one of the claims 1 through 7, **characterized in that** program code having at least one influencing device function (f'()) is stored in the influencing device (9), the service configuration (6) comprises calling (12) an influencing function (f'()), and the control device (1) signals the calling (12) of the influencing device function (f'()) to the influencing device (9) by means of the interface (8) when the corresponding service function (ecu_s()) is called (12), and the influencing device (9) executes the influencing device function (f'()).

9. The method according to claim 8, **characterized in that** a value for an argument (r) of the influencing device function (f'()) is stored in the control device (1), and/or a return value (y') of the influencing device function (f'()) is stored in the control device (1), in a memory location (11) indicated in the service configuration (6).

10. The method according to claim 9, **characterized in that** the memory location (11) for the argument (r) of the influencing device function (f'()) is monitored by the influencing device (9) by means of the interface (8) and the influencing device function (f'()) is called using the value for the argument (r) stored in the memory location (11) only if the memory location (11) has been written with a current value for the argument (r).

11. A control device (1) set up for external bypassing, the control device (1) being connected to a technical process (3) by means of an I/O interface (2), program code (4) having internal control device functions (a()) being stored on the control device (1), the program code (4) being instrumented with at least one service function (ecu_s()), and the control device (1) outputting control signals to the technical process (3) by means of the I/O interface (2) and receiving state parameters of the technical process (3) as signals by means of the I/O interface (2) when the program code (4) is executed, a service configuration (6) for the service function (ecu_s) being provided on the control device (1), the service configuration (6) being captured in the control device (1) when operating the control device (1) and a service functionality corresponding to the service configuration (6) being executed when the service function (ecu_s()) is called, **characterized in that** the service configuration (6) designates at least one internal control device function (a()) implemented as a service functionality of the corresponding service function (ecu_s()), so that by providing the service configuration (6) on the control device (1), the connected technical process (3) is flexibly affected, wherein the service function (ecu_s()) provides at least one value (x') for at least one argument of the internal control device function (a()) in the control device (1) by means of the service configuration (6) and/or accepts the at least one return value of the internal control device function (a()).

12. The control device (1) according to claim 11, **characterized in that** said device is programmed for performing a method according any one of the claims 2 through 10 in the operating state, that is, when executing the program code (4).

## Revendications

1. Procédé pour exploiter un appareil de commande (1), dans lequel un code de programme (4) avec des fonctions (a()) d'appareil de commande internes mises en œuvre de manière permanente est stocké sur l'appareil de commande (1), dans lequel le code de programme (4) est instrumenté avec au moins une fonction de service (ecu_s()), dans lequel l'appareil de commande, pour le contournement, est relié à un appareil d'influence (9) via une interface (8), dans lequel une configuration de service (6) pour la fonction de service (ecu_s()) est fournie sur l'appareil de commande (1), dans lequel la configuration de service (6) est enregistrée dans l'appareil de commande (1), et dans lequel, à l'appel de la fonction de service (ecu_s()), une fonctionnalité de service est exécutée conformément à la configuration de service (6), **caractérisé en ce que** la configuration de service (6) désigne au moins une fonction interne (a()) d'appareil de commande qui est exécutée en tant que fonctionnalité de service de la fonction de service (ecu_s()) correspondante, sachant que la fonction de service (ecu_s()), à l'aide de la configuration de service (6), fournit dans l'appareil de commande (1) au moins une valeur (x') pour au moins un argument de la fonction interne (a()) d'appareil de commande et/ou reçoit au moins une valeur de retour de la fonction interne (a()) d'appareil de commande.

2. Procédé selon la revendication 1, **caractérisé en ce qu'**un code exécutable est contenu dans la configuration de service (6), lequel code fournit dans l'appareil de commande (1) au moins une valeur (x') pour au moins un argument de la fonction interne (a()) d'appareil de commande et/ou reçoit au moins une valeur de retour de la fonction interne (a()) d'appareil de commande.

3. Procédé selon la revendication 1 ou 2, **caractérisé en ce que** la fonction de service (ecu_s()) est configurée pour appeler des fonctions avec des modèles prédéterminés d'arguments et/ou de valeurs de retour, sachant que la configuration de service (6) désigne la fonction interne (a()) d'appareil de commande par spécification du modèle prédéterminé et par spécification de l'adresse de début de la fonction interne (a()) d'appareil de commande.

4. Procédé selon l'une quelconque des revendications 1 à 3, **caractérisé en ce que** la configuration de service (6) est transférée de l'appareil d'influence (9) via l'interface (8) à l'appareil de commande (1) et mémorisée sur l'appareil de commande (1).

5. Procédé selon l'une quelconque des revendications 1 à 4, **caractérisé en ce que** dans la configuration de service (6), au moins un emplacement de mémorisation (10, 11) est spécifié où est stockée, dans l'appareil de commande (1), au moins une valeur (x') pour au moins un argument de la fonction interne (a()) d'appareil de commande et/ou est stockée, dans l'appareil de commande (1), au moins une valeur de retour (r) de la fonction interne (a()) d'appareil de commande.

6. Procédé selon la revendication 5, **caractérisé en ce que** l'emplacement de mémorisation (10) pour un argument (x') de la fonction interne (a()) d'appareil de commande est surveillé et la fonction interne (a()) d'appareil de commande n'est appelée avec la valeur pour l'argument (x') stockée à l'emplacement de mémorisation (10) qu'une fois que l'emplacement de mémorisation (10) a été écrit avec une valeur actuelle pour l'argument (x').

7. Procédé selon l'une quelconque des revendications 1 à 6, **caractérisé en ce que** l'appareil de commande (1) transmet la valeur de retour (r) de la fonction interne (a()) d'appareil de commande à l'appareil d'influence (9) via l'interface (8) et/ou l'appareil d'influence (9) lit la valeur de retour (r) de la fonction interne (a()) d'appareil de commande depuis l'appareil de commande (1) via de l'interface (8).

8. Procédé selon l'une quelconque des revendications 1 à 7, **caractérisé en ce qu'**un code de programme avec au moins une fonction (f'()) d'appareil d'influence est stocké dans l'appareil d'influence (9), la configuration de service (6) comprend l'appel (12) d'une fonction (f'()) d'appareil d'influence et, à l'appel (12) de la fonction de service (ecu_s()) correspondante, l'appareil de commande (1), via l'interface (8), signale l'appel (12) de la fonction (f'()) d'appareil d'influence à l'appareil d'influence (9) et l'appareil d'influence (9) exécute la fonction (f'()) d'appareil d'influence.

9. Procédé selon la revendication 8, **caractérisé en ce que** dans la configuration de service (6), un emplacement de mémorisation (11) est spécifié, où est stockée, dans l'appareil de commande (1), une valeur pour un argument (r) de la fonction (f'()) d'appareil d'influence et/ou est stockée, dans l'appareil de commande (1), une valeur de retour (y') de la fonction (f'()) d'appareil d'influence.

10. Procédé selon la revendication 9, **caractérisé en ce que** l'emplacement de mémorisation (11) pour l'argument (r) de la fonction (f'()) d'appareil d'influence est surveillé par l'appareil d'influence (9) via l'interface (8) et la fonction (f'()) d'appareil d'influence n'est appelée avec la valeur pour l'argument (r) stockée dans l'emplacement de mémorisation (11) qu'une fois que l'emplacement de mémorisation (11) a été écrit avec une valeur actuelle pour l'argument (r).

11. Appareil de commande (1) configuré pour un contournement externe, dans lequel l'appareil de commande (1) est connecté à un processus technique (3) via une interface E/S (2), dans lequel un code de programme (4) avec des fonctions (a()) d'appareil de commande internes est stocké sur l'appareil de commande (1), dans lequel le code de programme (4) est instrumenté avec au moins une fonction de service (ecu_s()) et dans lequel, à l'exécution du code de programme (4), l'appareil de commande (1), via l'interface E/S (2), émet des signaux de commande au processus technique (3) et, via l'interface E/S (2), reçoit des grandeurs d'état du processus technique (3) en tant que signaux, dans lequel une configuration de service (6) pour la fonction de service (ecu_s) est fournie sur l'appareil de commande (1), dans lequel la configuration de service (6) est enregistrée dans l'appareil de commande (1) durant le fonctionnement de l'appareil de commande (1) et, à l'appel de la fonction de service (ecu_s()), une fonctionnalité de service est exécutée conformément à la configuration de service (6), **caractérisé en ce que** la configuration de service (6) désigne au moins une fonction interne (a()) d'appareil de commande qui est exécutée en tant que fonctionnalité de service de la fonction de service (ecu_s()) correspondante, de sorte que par la fourniture de la configuration de service (6) dans l'appareil de commande (1), une action est exercée de manière flexible sur le processus technique (3) connecté, dans lequel la fonction de service (ecu_s()), à l'aide de la configuration de service (6), fournit dans l'appareil de commande (1) au moins une valeur (x') pour au moins un argument de la fonction interne (a()) d'appareil de commande et/ou reçoit au moins une valeur de retour de la fonction interne (a()) d'appareil de commande.

12. Appareil de commande (1) selon la revendication 11, **caractérisé en ce qu'**il est programmé de manière à exécuter, en l'état de fonctionnement, donc à l'exécution du code de programme (4), un procédé selon l'une quelconque des revendications 2 à 10.
